(19) **Europäisches Patentamt / European Patent Office / Office européen des brevets**

(11) **EP 2 418 371 B1**

(12) **EUROPEAN PATENT SPECIFICATION**

(45) Date of publication and mention
of the grant of the patent:
**16.10.2013 Bulletin 2013/42**

(51) Int Cl.:
**F02M 25/07** [(2006.01)]

(21) Application number: **09842994.7**

(22) Date of filing: **06.04.2009**

(86) International application number:
**PCT/JP2009/057078**

(87) International publication number:
**WO 2010/116484 (14.10.2010 Gazette 2010/41)**

(54) **EGR CONTROL SYSTEM OF AN INTERNAL COMBUSTION ENGINE**

AGR-STEUERSYSTEM FÜR EINEN VERBRENNUNGSMOTOR

SYSTÈME DE COMMANDE DE RECIRCULATION DES GAZ D'ÉCHAPPEMENT POUR MOTEUR À COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.02.2012 Bulletin 2012/07**

(73) Proprietor: **TOYOTA JIDOSHA KABUSHIKI KAISHA**
**Toyota-shi, Aichi-ken, 471-8571 (JP)**

(72) Inventors:
• **YAMASHITA, Akira**
**Toyota-shi,**
**Aichi-ken, 471-8571 (JP)**
• **OHKI, Hisashi**
**Toyota-shi,**
**Aichi-ken, 471-8571 (JP)**
• **MATSUBARA, Yukiko**
**Toyota-shi,**
**Aichi-ken, 471-8571 (JP)**

(74) Representative: **TBK**
**Bavariaring 4-6**
**80336 München (DE)**

(56) References cited:
WO-A1-2008/118660        WO-A1-2008/149212
JP-A- 11 022 561          JP-A- 2008 261 300
JP-A- 2008 261 300        JP-A- 2008 303 825
JP-A- 2009 024 559        JP-A- 2009 047 130
JP-A- 2009 047 130        US-A1- 2007 119 172

• **WANG JUNMIN: "Air fraction estimation for multiple combustion mode diesel engines with dual-loop EGR systems", CONTROL ENGINEERING PRACTICE, PERGAMON PRESS, OXFORD, GB, vol. 16, no. 12, 1 December 2008 (2008-12-01), pages 1479-1486, XP024529877, ISSN: 0967-0661, DOI: 10.1016/J.CONENGPRAC. 2008.04.007 [retrieved on 2008-06-10]**

**Description**

[TECHNICAL FIELD]

The present invention relates to an exhaust gas recirculation (EGR) control system of an internal combustion engine.

[BACKGROUND ART]

There has been known an EGR system which is provided with a turbocharger that has a turbine arranged in an exhaust passage and a compressor arranged in an intake passage, a high pressure EGR passage that connects between the exhaust passage at a location upstream of the turbine and the intake passage at a location downstream of the compressor, and a low pressure EGR passage that connects between the exhaust passage at a location downstream of the turbine and the intake passage at a location upstream of the compressor, wherein a part of an exhaust gas is caused to recirculate to an intake system of an internal combustion engine by the use of the high pressure EGR passage and the low pressure EGR passage in combination.

For example, in Japanese patent application laid-open No. 2008-261300, there is described an EGR control system in which a ratio of an amount of low pressure EGR gas with respect to an amount of intake air sucked into an internal combustion engine and a ratio of an amount of high pressure EGR gas with respect to the amount of intake air, which are obtained by the use of a concentration of $CO_2$ in a portion of the intake passage which is at the downstream side of a connection part thereof with the low pressure EGR passage and at the upstream side of a connection part thereof with the high pressure EGR passage, a concentration of $CO_2$ in a portion of the intake passage which is at the downstream side of the connection part thereof with the high pressure EGR passage, and a concentration of $CO_2$ discharged from the internal combustion engine, are controlled so as to become individual target values, respectively. WO 2008/149212 A1 discloses an EGR system according to the preamble of claim 1.

[SUMMARY OF THE INVENTION]

[PROBLEMS TO BE SOLVED BY THE INVENTION]

In the EGR system in which the recirculation of an exhaust gas is carried out by the use of the high pressure EGR passage and the low pressure EGR passage in combination, it is necessary not only to adjust an EGR ratio to its target value, but also to adjust a ratio between the high pressure EGR gas and the low pressure EGR gas in an entire EGR gas to its target value. Even if the EGR ratio matches its target value, when the ratio or proportion of the high pressure EGR gas is excessively high, the temperature of intake air may go up, thus resulting in a decrease in the reliability of an EGR valve and engine parts, a deterioration in exhaust gas emissions (an increase of NOx), and a deterioration in fuel consumption. On the contrary, when the ratio or proportion of the low pressure EGR gas is excessively high, the temperature of intake air may fall, thus resulting in a deterioration in exhaust gas emissions (an increase of HC) and instability in combustion.

In the conventional EGR control, the amount of intake air and the $O_2$ concentration of intake air are controlled so as to adjust a total EGR ratio to a target value thereof, so it is impossible to detect a deviation of the ratio between the high pressure EGR gas and the low pressure EGR gas from its target value.

In the system described in the above-mentioned first patent document JP 2008-261300, by the provision of three $CO_2$ concentration sensors, it is possible to control the ratio of the high pressure EGR gas to the amount of intake air and the ratio of the low pressure EGR gas to the amount of intake air independently of each other, but there is a problem that the number of sensors to be mounted is large, thus resulting in high costs.

In addition, it can be considered that a temperature sensor is arranged in the intake passage, and a ratio between the high pressure EGR gas and the low pressure EGR gas is obtained by making use of the presence of a difference between the temperature characteristics of the high pressure EGR gas and the low pressure EGR gas, or an air fuel ratio sensor is arranged in the intake passage at the upstream side of its connection part with the high pressure EGR passage, and a ratio between the high pressure EGR gas and the low pressure EGR gas is obtained by obtaining the EGR ratio in a state before the high pressure EGR gas is mixed, but in either of the cases, there is a problem that it is necessary to additionally install a new sensor such as the temperature sensor or the air fuel ratio sensor, thus resulting in an increased cost.

The present invention is made in view of such problems, and has for its object to construct an EGR control system at low cost in which the recirculation of an exhaust gas is carried out by the use of a high pressure EGR passage and a low pressure EGR passage in combination, and which is capable of detecting a ratio between a high pressure EGR gas and a low pressure EGR gas.

[MEANS FOR SOLVING THE PROBLEMS]

In order to solve the above-mentioned problems, an EGR control system of an internal combustion engine according to the present invention is characterized by comprising:

a supercharger that has a turbine arranged in an exhaust passage of the internal combustion engine and a compressor arranged in an intake passage of the internal combustion engine;

a high pressure EGR passage that connects between said exhaust passage at a location upstream of said turbine and said intake passage at a location downstream of said compressor;

a low pressure EGR passage that connects between said exhaust passage at a location downstream of said turbine and said intake passage at a location upstream of said compressor;

a detection means for detecting a change of a predetermined characteristic of an exhaust gas in said exhaust passage at the downstream side of a connection part thereof with said high pressure EGR passage;

a changing means for changing said characteristic of the exhaust gas; and

an obtaining means for obtaining **a mixing ratio which is** a ratio between an exhaust gas recirculated to said intake passage through said high pressure EGR passage and an exhaust gas recirculated to said intake passage through said low pressure EGR passage, in an entire exhaust gas recirculated to said intake passage, based on a delay time after said characteristic of the exhaust gas is changed by said changing means until the change of the characteristic is detected by said detection means.

The characteristic of the exhaust gas is a characteristic of the exhaust gas to which a change is able to be given intentionally by means of the changing means, and for example, is air fuel ratio, oxygen concentration, temperature, pressure, or the like. The detection means may be anything which is able to detect a change of this characteristic. In other words, anything is good if it is able to detect that the exhaust gas of which the characteristic was changed by the changing means has reached the position of the detection means. It does not necessarily need to measure a value of the characteristic. As the detection means, there can be exemplified an air fuel ratio sensor, an oxygen concentration sensor, a temperature sensor, or the like.

According to a keen and earnest study of the applicant, it has been found that the delay time after the characteristic of the exhaust gas is changed by the changing means until a change of the characteristic is detected by the detection means has a definite relation with respect to a ratio between an exhaust gas (hereinafter referred to as a high pressure EGR gas) recirculated to the intake passage through the high pressure EGR passage in an entire exhaust gas (hereinafter referred to as an entire or total EGR gas) recirculated to the intake passage, and an exhaust gas (hereinafter referred to as a low pressure EGR gas) recirculated to the intake passage through the low pressure EGR passage.

The present invention is an invention which is intended to obtain, on the basis of this relation, a current ratio between the high pressure EGR gas and the low pressure EGR gas from a measured value of the delay time.

The measured value of this delay time can be obtained as a time difference between the timing at which the characteristic of the exhaust gas is changed by the changing means, and the timing at which it is detected by the detection means that the exhaust gas with its characteristic changed has reached the position of the detection means. As the detection means, there can be diverted any of the various sensors as stated above, which are existing sensors, etc., provided for other purposes. For example, it is common that an internal combustion engine having an exhaust gas purification device such as a particulate filter, an NOx catalyst, etc., is already provided with sensors such as an air fuel ratio sensor, an oxygen concentration sensor, etc., for the purpose of exhaust gas purification processing such as filter regeneration processing, NOx reduction processing, etc. It is possible to obtain the measured value of the delay time by making use of these existing sensors as the detection means in the present invention.

According to the present invention, based on the measured value of the delay time thus obtained, the ratio between the high pressure EGR gas and the low pressure EGR gas can be obtained by making use of the above-mentioned relation between the delay time and the ratio between the high pressure EGR gas and the low pressure EGR gas, without newly installing an additional sensor for exclusive use. Accordingly, it becomes possible to construct a system at low cost, which is capable of obtaining the ratio between the high pressure EGR gas and the low pressure EGR gas.

Said obtaining means can obtain said ratio based on:

the delay time after the characteristic of the exhaust gas is changed by said changing means until a change of the characteristic is detected by said detection means;

a volume of a flow path of the exhaust gas from a position at which the characteristic of the exhaust gas is changed by said changing means to a position at which the change of the characteristic is detected by said detection means;

a displacement of said internal combustion engine;

a volumetric efficiency of said internal combustion engine;

a temperature and a pressure of an intake gas of said internal combustion engine;

a temperature and a pressure of the exhaust gas recirculated to the intake passage through said low pressure EGR passage; and

a number of revolutions per unit time of said internal combustion engine.

When said delay time is represented by a number of cycles, it is as shown in Expression 1.

[Expression 1]

$$\frac{A}{V \cdot \eta \cdot \alpha} \cdot \beta$$

Here, A is a volume of a flow path of the exhaust gas from a position at which the characteristic of the exhaust gas is changed by the changing means to a position at which the change of the characteristic is detected by the detection means. $\beta$ is a reciprocal of the ratio of an amount of low pressure EGR gas to an entire amount of EGR gas, and $\beta$ = Gegr/ Glpl, in cases where the entire amount of EGR gas is denoted by Gegr and the amount of low pressure EGR gas is denoted by Glpl. V is a displacement of the internal combustion engine. $\eta$ is a volumetric efficiency of the internal combustion engine. $\alpha$ is a correction coefficient based on a difference in temperature and in pressure between the intake gas of the internal combustion engine and the low pressure EGR gas, and in cases where the temperature and the pressure of the intake gas of the internal combustion engine are Tb and Pb, respectively, and the temperature and the pressure of the low pressure EGR gas are Ta and Pa, respectively, the following equation holds:

$$\alpha = \left(\frac{Ta}{Tb}\right) \cdot \left(\frac{Pa}{Pb}\right)^{-1}$$

The delay time is obtained by converting this number of cycles into time based on the number of revolutions per unit time of the internal combustion engine. Information on the ratio between the high pressure EGR gas and the low pressure EGR gas in the entire EGR gas is included in $\beta$, so the ratio between the high pressure EGR gas and the low pressure EGR gas can be obtained by obtaining $\beta$ based on the measured value of the delay time and the equation of Expression 1.

In the present invention,

said detection means may have an air fuel ratio measuring means for measuring an air fuel ratio of the exhaust gas in said exhaust passage downstream of its connection part with said high pressure EGR passage and upstream of its connection part with said low pressure EGR passage;

said changing means may have a fuel supply means for supplying fuel to the exhaust gas upstream of the position at which the measurement of the air fuel ratio by said air fuel ratio measuring means is carried out; and

said obtaining means may obtain said ratio based on a delay time after fuel is added to the exhaust gas by said fuel **supply** means until a change in the air fuel ratio of the exhaust gas following the addition of fuel is measured by said air fuel ratio measuring means.

According to the above construction, the air fuel ratio of the exhaust gas is intentionally changed by supplying fuel to the exhaust gas by means of the fuel supply means, whereby the measured value of the delay time can be obtained from the timing at which the supply of fuel to the exhaust gas by the fuel supply means is carried out, and the timing at which a change of the air fuel ratio of the exhaust gas following the supply of fuel is detected by the air fuel ratio measuring means. Then, based on this measured value of the delay time, a current ratio between the high pressure EGR gas and the low pressure EGR gas can be obtained by making use of the above-mentioned relation between the delay time and the ratio between the high pressure EGR gas and the low pressure EGR gas.

Here, in general, exhaust gas purification processing such as  regeneration processing of a particulate filter, reduction processing of an NOx storage reduction catalyst, etc., is accompanied by the supply of fuel to the exhaust gas. In the present invention, when the supply of fuel to the exhaust gas is carried out accompanying such exhaust gas purification processing, the obtaining means can carry out the obtaining of the ratio between the high pressure EGR gas and the low pressure EGR gas. That is, there is not necessarily a need to carry out the supply of fuel in particular for the purpose of obtaining the ratio, and the obtaining of the ratio can also be carried out in parallel by taking an opportunity where general exhaust gas purification processing accompanied by the supply of fuel to the exhaust gas is carried out. Accordingly, there is no need not only to additionally install a new sensor, etc., for the purpose of obtaining the ratio but also to carry out the supply of fuel only for the obtaining of the ratio, as a result of which there will be no adverse influence on fuel economy performance, etc., which would otherwise result from the obtaining processing of the ratio.

In the above construction, even if the air fuel ratio measuring means is means for measuring the air fuel ratio of the exhaust gas at the upstream side of a connection part of the low pressure EGR passage, or means for measuring the air fuel ratio of the exhaust gas at the downstream side of the connection part of the low pressure EGR passage, it is possible to obtain the measured value of the delay time. Accordingly, an air fuel ratio measuring means already provided for the above-mentioned exhaust gas purification processing or other control purposes may be diverted for obtaining the measured value of the delay time in the present invention, irrespective of whether the means is arranged at the upstream side or at the downstream side of the connection part of the low pressure EGR passage. By doing so, it becomes unnecessary to newly and additionally mount an air fuel ratio measuring means for the purpose of obtaining the measured value of the delay time, and hence, it becomes possible to construct the EGR control system capable of obtaining the ratio at low cost.

As the fuel supply means for exhaust gas purification processing, there can be used a fuel addition valve which carries out the addition of fuel to the exhaust passage, a fuel injection valve which carries out a post injection, etc. Accordingly, these existing fuel supply means may be diverted for the obtaining of the ratio in the present invention. By doing so, it becomes unnecessary to carry out new and additional installing of a fuel supply means for the purpose of obtaining the ratio, thus making it possible to suppress an increase in cost.

In the present invention, provision may be further made for a control means for controlling an amount of exhaust gas recirculated to said intake passage through said high pressure EGR passage and an amount of exhaust gas recirculated to said intake passage through said low pressure EGR passage, in such a manner that the ratio obtained by said obtaining means becomes a predetermined target value.

The predetermined target value is a ratio between the high pressure EGR gas and the low pressure EGR gas, which is beforehand set in such a manner that desired fuel consumption performance or desired exhaust performance can be achieved. According to the present invention, because the value of the current mixing ratio can be obtained by the obtaining means, the amount of the high pressure EGR gas or the amount of the low pressure EGR gas can be controlled in a feedback manner so that the mixing ratio is made to match a target value. As a result of this, in the system which carries out the recirculation of exhaust gas by the use of the high pressure EGR passage and the low pressure EGR passage in combination with each other, it becomes possible to enhance fuel consumption performance and exhaust performance to a further extent, while suppressing an increase in cost.

In the present invention, provision may be further made for an abnormality determination means for making a determination that an abnormality has occurred in said control means, in cases where the mixing ratio obtained by said obtaining means deviates from a predetermined target value by more than a predetermined threshold value.

The predetermined threshold value is beforehand defined based on an upper limit value of a deviation which may occur between the current value of the mixing ratio, and its target value in cases where the control means is normal. According to the present invention, because the value of the current mixing ratio can be obtained by the obtaining means, it can be determined, based on a comparison between the current mixing ratio and its target value, whether the current mixing ratio is abnormal.

[EFFECT OF THE INVENTION]

According to the present invention, it becomes possible to construct an EGR control system at low cost in which the recirculation of an exhaust gas is carried out by the use of a high pressure EGR passage and a low pressure EGR passage in combination, and which is capable of detecting a ratio between a high pressure EGR gas and a low pressure EGR gas.

[BRIEF DESCRIPTION OF THE DRAWINGS]

[Fig. 1] is a view schematically showing the outline construction of an internal combustion engine with its intake system and its exhaust system, to which an EGR control system according to an embodiment of the present invention is applied.

[Fig. 2] is a view showing the relation between the number of cycles of a recirculation delay and an amount of the low pressure EGR gas in the EGR control system according to the embodiment.

[Fig. 3] is a flow chart representing the obtaining of a ratio between a high pressure EGR gas and a low pressure EGR gas in the embodiment, and the content of processing of EGR control according to the result of the obtaining.

[EXPLANATION OF REFERENCE NUMERALS AND CHARACTERS]

| | |
|---|---|
| 1 | engine |
| 2 | cylinders |
| 3 | intake passage |
| 4 | exhaust passage |
| 5 | intake manifold |
| 6 | exhaust manifold |
| 7 | compressor |
| 8 | turbine |
| 9 | high pressure EGR passage |
| 10 | high pressure EGR valve |
| 11 | intercooler |
| 12 | low pressure EGR passage |
| 13 | low pressure EGR cooler |
| 14 | low pressure EGR valve |
| 17 | exhaust gas purification device |
| 18 | filter |
| 19 | NOx storage reduction catalyst |
| 20 | air fuel ratio sensor |
| 21 | fuel addition valve |
| 22 | crank angle sensor |
| 23 | first throttle valve |
| 24 | second throttle valve |
| 25 | air flow meter |
| 26 | air cleaner |
| 27 | accelerator opening sensor |
| 28 | ECU |
| 29 | fuel injection valves |
| 30 | branch portion |

[BEST MODES FOR CARRYING OUT THE INVENTION]

[First Embodiment]

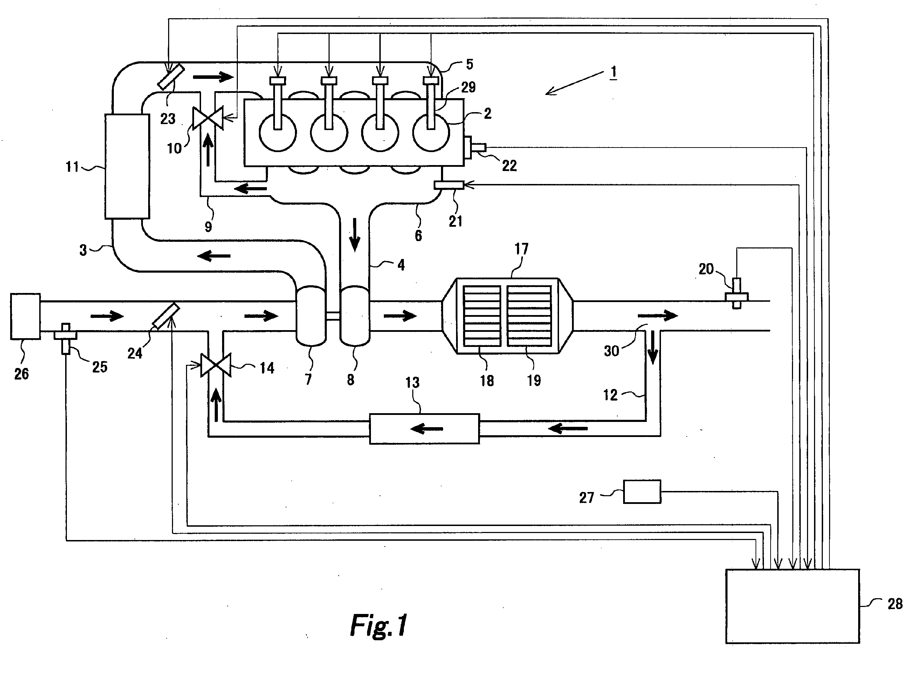

Reference will be made to an exhaust gas recirculation (EGR) control system of an internal combustion engine according to a first embodiment of the present invention. Fig. 1 is a view schematically showing the outline construction of an internal combustion engine with its intake system and its exhaust system, to which the EGR control system of an internal combustion engine according to this embodiment is applied. In Fig. 1, the engine 1 has four cylinders 2, and each of the cylinders 2 is provided with a fuel injection valve 29 that directly injects fuel into the interior of the cylinder. The engine 1 is provided with a crank angle sensor 22 that measures the angle of rotation of a crankshaft of the engine 1, and an accelerator opening sensor 27 that measures the amount of depression of an unillustrated accelerator pedal. The individual cylinders 2 are in fluid communication with an intake manifold 5 and an exhaust manifold 6.

An intake passage 3 is connected to the intake manifold 5. A high pressure EGR passage 9, which serves to introduce a part of exhaust gas in the exhaust manifold 6 to the intake passage 3 at high temperature and high pressure, is connected to the intake passage 3. In this embodiment, the high pressure EGR passage 9 corresponds to a high pressure EGR passage in the present invention. A first throttle valve 23, which can change the channel cross section of the intake passage 3, is arranged in the intake passage 3 at the upstream side of a connection portion of the high pressure EGR passage 9. An intercooler 11, which serves to cool intake air, is arranged in the intake passage 3 at the upstream side of the first throttle valve 23. A compressor 7 of a supercharger is arranged in the intake passage 3 at the upstream side of the intercooler 11. A low pressure EGR passage 12, which serves to introduce a part of the exhaust gas in the exhaust passage 4 to the intake passage 3 at low temperature and low pressure, is connected to the intake passage 3 at the upstream side of the compressor 7. In this embodiment, the low pressure EGR passage 12 corresponds to a low pressure EGR passage in the present invention. A second throttle valve 24, which can change the channel cross section of the intake passage 3, is arranged in the intake passage 3 at the upstream side of a connection portion of the low pressure EGR passage 12. An air flow meter 25, which serves to measure the flow rate of air flowing into the intake passage 3, is arranged in the intake passage 3 at a location upstream of the second throttle valve 24. An air cleaner 26, which serves to remove foreign matter in the air, is arranged in the intake passage 3 at the upstream side of the air flow meter 25.

The above-mentioned high pressure EGR passage 9 is connected to the exhaust manifold 6, so that it serves to place the exhaust manifold 6 and the intake passage 3 in fluid communication with each other. In addition, a fuel addition valve 21, which serves to add or inject fuel into the exhaust gas, is arranged in the exhaust manifold 6. The exhaust passage 4 is connected to the exhaust manifold 6. A turbine 8 of the supercharger is arranged in the exhaust passage 4. An exhaust gas purification device 17 is arranged in the exhaust passage 4 at the downstream side of the turbine 8. The exhaust gas purification device 17 has a filter 18 for trapping particulate matter (PM) in the exhaust gas and an NOx storage reduction catalyst 19. The above-mentioned low pressure EGR passage 12 is branched from the exhaust passage 4 in a branch portion 30 in the exhaust passage 4 at the downstream side of the exhaust gas purification device 17.

A high pressure EGR valve 10 for changing the channel cross section of the high pressure EGR passage 9 is arranged in the high pressure EGR passage 9. By changing the degree of opening of the high pressure EGR valve 10, it is possible to adjust the flow rate of exhaust gas (hereinafter referred to as a high pressure EGR gas) recirculated to the intake passage 3 through the high pressure EGR passage 9. In addition, a low pressure EGR valve 14 for changing the channel cross section of the low pressure EGR passage 12 is arranged in the low pressure EGR passage 12. By changing the degree of opening of the low pressure EGR valve 14, it is possible to adjust the flow rate of exhaust gas (hereinafter referred to as a low pressure EGR gas) recirculated to the intake passage 3 through the low pressure EGR passage 12. A low pressure EGR cooler 13, which serves to cool the low pressure EGR gas, is arranged in the low pressure EGR passage 12 at the upstream side of the low pressure EGR valve (i.e., at the side of the exhaust passage 4).

Exhaust gas purification processing is carried out on the exhaust gas purification device 17. That is, when it is determined that the amount of particulate matter trapped by the filter 18 has reached a predetermined reference amount, processing to oxidize and remove the particulate matter trapped by the filter 18 is carried out by adding or injecting fuel into the exhaust gas from the fuel addition valve 21. Also, when the amount of NOx occluded or stored in the NOx catalyst 19 has reached a predetermined reference amount, processing to cause the NOx stored in the NOx catalyst 19 to be released from the NOx catalyst 19 and to be reduced and purified is carried out by adding fuel into the exhaust gas from the fuel addition valve 21. And, when it is determined that the amount of sulfur stored in the NOx catalyst 19 has reached a predetermined reference amount, processing to remove the sulfur stored in the NOx catalyst 19 is carried out by adding or injecting fuel into the exhaust gas from the fuel addition valve 21.

Here, note that as a means for supplying fuel to the exhaust gas upstream of the exhaust gas purification catalyst 17 in the exhaust gas purification processing, a post injection of fuel may be carried out by means of each fuel injection valve 29, other than the addition of fuel by the fuel addition valve 21. The post injection is a small amount of auxiliary injection which is carried out after a main fuel injection at the timing which is not involved in combustion.

In order to control the amount of fuel to be supplied to the exhaust gas in the exhaust gas purification processing, the system of this embodiment is provided with an air fuel ratio sensor 20 which is arranged in the exhaust passage 4 at the downstream side of the branch portion 30 of the low pressure EGR passage 12. The addition of fuel by the fuel addition valve 21 and/or the post injection by the fuel injection valves 29 are controlled based on a measured value of the air fuel ratio of the exhaust gas obtained by the air fuel ratio sensor 20 so that an amount of fuel required to carry out the exhaust gas purification processing in a suitable manner is supplied to the exhaust gas in an accurate manner.

In the engine 1, there is arranged in combination therewith an electronic control means (ECU) 28 which is a computer for controlling the operation of the engine 1. The above-mentioned crank angle sensor 22, the air flow meter 25, the air fuel ratio sensor 20, and the accelerator opening sensor 27 are connected to the ECU 28, and measured data by these individual sensors are inputted to the ECU 28. In addition, the above-mentioned fuel injection valves 29, the high pressure EGR valve 10, the first throttle valve 23, the low pressure EGR valve 14, the second throttle valve 24, and the fuel addition valve 21 are connected to the ECU 28, and the operations of these individual equipment or valves are respectively controlled by commands from the ECU 28. The ECU 28 has a known construction provided with a CPU, a memory, an input/output interface, etc., and controls the operations of the above-mentioned individual equipment by obtaining the operating state of the engine 1 and driver's requests from the measured data inputted from the above-mentioned individual sensors  connected thereto, and further obtaining, based on them, the control target values of the above-mentioned individual equipment.

In the EGR control system of this embodiment, the recirculation of exhaust gas is carried out by using, in combination, two passages, the high pressure EGR passage 9 and the low pressure EGR passage 12. In such an EGR system, it is necessary not only to adjust an EGR ratio to its target value, but also to adjust a ratio between the high pressure EGR gas and the low pressure EGR gas in an entire exhaust gas recirculated to the intake passage 3 (hereinafter referred to as an entire EGR gas) to its target value. Even if the EGR ratio matches its target value, when the ratio or proportion of the high pressure EGR gas is becomes higher than its target value, the temperature of intake air may go up, thus causing a decrease in the reliability of the engine 1 and/or component parts of the intake system, a deterioration in exhaust gas emissions (an increase of NOx), and a deterioration in fuel mileage. On the contrary, when the ratio or proportion of the low pressure EGR gas becomes higher than its target value, the temperature of intake air may fall, thus causing a deterioration in exhaust gas emissions (an increase of HC) and instability in combustion.

Accordingly, in cases where the current ratio between the high pressure EGR gas and the low pressure EGR gas is obtained and the value of the ratio thus obtained deviates from its target value, it is necessary to control the amount of high pressure EGR gas and the amount of low pressure EGR gas so as to eliminate the deviation.

However, in conventional systems in which the amount of intake air and the 02 concentration of intake air are controlled so as to adjust only the EGR ratio to its target value, it is impossible to obtain the ratio between the high pressure EGR gas and the low pressure EGR gas. Moreover, there has already been proposed a system in which a $CO_2$ concentration sensor, an air fuel ratio sensor, a temperature sensor and the like are newly and additionally mounted on the intake system and/or the exhaust system, wherein the ratio between the high pressure EGR gas and the low pressure EGR gas is obtained based on the measured values of those sensors, but there has been a problem that the cost thereof becomes high.

Accordingly, in the system of this embodiment, it is configured such that an actual value is obtained for the ratio between the high pressure EGR gas and the low pressure EGR gas by the use of the air fuel ratio sensor 20  which is provided for controlling the supply of fuel to the exhaust gas in the exhaust gas purification processing of the above-mentioned exhaust gas purification device 17.

Specifically, at the time of the execution of the exhaust gas purification processing, a delay time At from when fuel has been added to the exhaust gas by the fuel addition valve 21 until the enriching of the air fuel ratio in accordance with the addition of fuel is detected by the air fuel ratio sensor 20 is obtained, and based on this delay time At, the ratio or proportion of the low pressure EGR gas in the entire EGR gas is obtained.

In the following, a method of obtaining the ratio or proportion of the low pressure EGR gas in the entire EGR gas based on the delay time At will be explained.

The delay time At from when fuel has been added to the exhaust gas by the fuel addition valve 21 until the enriching of the air fuel ratio in accordance with the addition of fuel is detected by the air fuel ratio sensor 20 is based on the time taken for the exhaust gas having passed a position where fuel is added to the exhaust gas by the fuel addition valve 21 to reach a position where the measurement of the air fuel ratio is carried out by the air fuel ratio sensor 20. Based on this idea, the delay time At can be represented by the number of cycles as shown in an equation of Expression 2.

[Expression 2]

$$\frac{A}{V \cdot \eta \cdot \alpha} \cdot \beta$$

This is hereinafter referred to as "the number of cycles of a recirculation delay". In Expression 2, A is the passage volume of a path through which the exhaust gas flows from the position where fuel is added to the exhaust gas by the fuel addition valve 21 to the position where the measurement of the air fuel ratio is carried out by the air fuel ratio sensor 20. $\beta$ is a reciprocal of the ratio of an amount of low pressure EGR gas to a total or entire amount of EGR gas, and $\beta$ = Gegr/Glpl, in cases where the total or entire amount of EGR gas is denoted by Gegr and the amount of low pressure EGR gas is denoted by Glpl. V is a displacement of the engine 1. η is a volumetric efficiency of the engine 1. α is a correction coefficient based on a difference in temperature and pressure between an intake gas of the engine 1 and the low pressure EGR gas, and in cases where the temperature and the pressure in the intake manifold 5 are Tb and Pb, respectively, and the temperature and the pressure in the low pressure EGR passage 12 are Ta and Pa, respectively,

$$\alpha = \left(\frac{Ta}{Tb}\right) \cdot \left(\frac{Pa}{Pb}\right)^{-1}$$

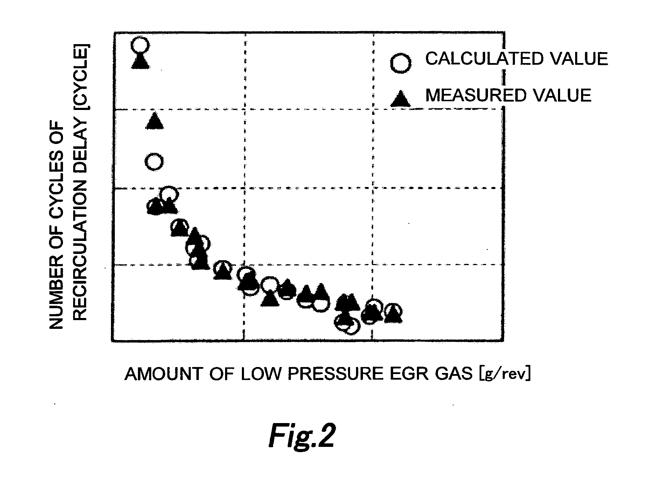

Fig. 2 is a view in which the number of cycles of the recirculation delay in various amounts of low pressure EGR gas is obtained by the calculation according to the equation of Expression 2, and by actual measurements, respectively. An axis of abscissa in Fig. 2 represents the amount of low pressure EGR gas, and an axis of ordinate represents the number of cycles of the recirculation delay. As shown in Fig. 2, the values calculated by the equation of Expression 1 describes well the measured values, and the number of cycles of the recirculation delay tends to decrease in accordance with the increasing amount of low pressure EGR gas.

Then, when the relation between the amount of low pressure EGR gas and the number of cycles of the recirculation delay (1, 200- 2, 400 rpm) was investigated while changing the number of revolutions per unit time of the engine 1, it was found that this relation did not depend on the number of revolutions per unit time of the engine 1. That is, it is considered that the number of cycles of the recirculation delay is substantially decided by the amount of low pressure EGR gas, without depending on the number of revolutions per unit time of the engine 1. Accordingly, under the condition that the amount of low pressure EGR gas is equal, the number of cycles of the recirculation delay is constant, but when the number of cycles is converted into time, it becomes shorter in accordance with the increasing number of revolutions per unit time of the engine 1. As a result, under the condition that the amount of low pressure EGR gas is equal, the recirculation delay tends to become shorter in accordance with the increasing number of revolutions per unit time of the engine 1.

Based on the equation of Expression 2, the reciprocal β of the ratio or proportion of the low pressure EGR gas in the entire EGR gas can be obtained from the measured value of the delay time At obtained at the time of the exhaust gas purification processing. Based on this β, the ratio between the high pressure EGR gas and the low pressure EGR gas can be obtained. As described above, the measured value of the delay time Δt can be obtained by the use of the existing air fuel ratio sensor 20 which is provided for exhaust gas purification processing, so there is no need to additionally mount or employ a new sensor in order to obtain the ratio between the high pressure EGR gas and the low pressure EGR gas. Accordingly, it becomes possible to construct a system which can obtain a current value of the ratio between the high pressure EGR gas and the low pressure EGR gas at low cost.

Thus, in the system of this embodiment, the current value of the ratio between the high pressure EGR gas and the low pressure EGR gas can be obtained, and hence, it is possible to detect a deviation of this ratio from its target value. Accordingly, the amount of high pressure EGR gas and the amount of low pressure EGR gas can be controlled so as to eliminate this deviation thereby to make the ratio match with its target value. As a result of this, in the system which carries out the recirculation of exhaust gas by the use of the high pressure EGR passage 9 and the low pressure EGR passage 12 in combination with each other, good fuel economy performance and good exhaust performance can be obtained.

In this embodiment, the air fuel ratio of the exhaust gas corresponds to a characteristic of an exhaust gas in the present invention, and the air fuel ratio sensor 20 corresponds to a detection means in the present invention. In addition, the fuel addition valve 21 which serves to add fuel to an exhaust gas at the time of exhaust gas purification processing, or the fuel injection valves 29 which carry out the post injection, correspond to a changing means in the present invention.

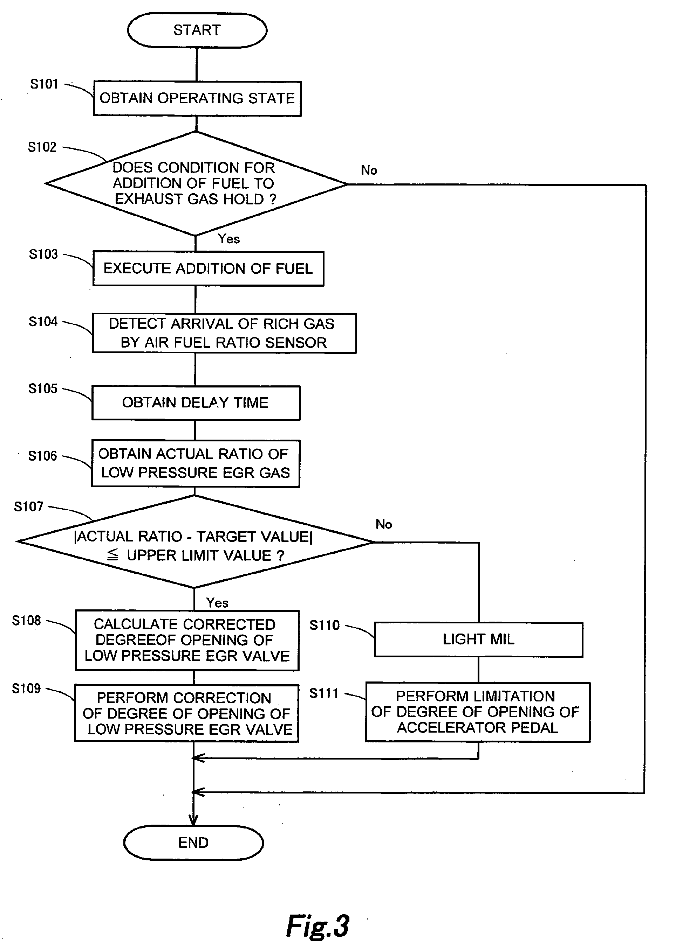

Reference will be made to the obtaining of the ratio between the high pressure EGR gas and the low pressure EGR gas in this embodiment, and the content of processing of EGR control according to a result of the obtaining, based on a flow chart in Fig. 3. The processing shown in the flow chart of Fig. 3 is carried out by the ECU 28 in a repeated manner every predetermined interval during the operation of the engine 1.

In step S101, the ECU 28 obtains the operating state of the engine 1. Here, the ECU 28 obtains the number of revolutions per unit time and the load of the engine 1 based on the measured value of the degree of crank angle detected by the crank angle sensor 22, and the amount of depression of the accelerator pedal detected by the accelerator opening sensor 27.

In step S102, the ECU 28 determines whether a condition for carrying out the addition of fuel to the exhaust gas is satisfied. As stated above, it is determined whether the amount of particulate matter trapped by the filter 18 has reached the above-mentioned reference amount, whether the amount of NOx stored in the NOx catalyst 19 has reached the above-mentioned reference amount, whether the amount of sulfur stored in the NOx catalyst 19 has reached above-mentioned reference amount, whether a condition for activating the catalyst supported on the filter 18 and the NOx catalyst 19 is satisfied, or the like. In cases where a determination is made that the condition for carrying out the addition of fuel to the exhaust gas is satisfied in step S102 (Yes), the process of the ECU 28 goes to the processing of step S103. In cases where a determination is made that the condition for carrying out the addition of fuel to the exhaust gas is not satisfied in step S102 (No), the ECU 28 once escapes from the routine of this flow chart.

In step S103, the ECU 28 carries out the addition of fuel to the exhaust gas by means of the fuel addition valve 21. Here, note that the fuel injection valves 29 may carry out the post injection, as stated above. At this time, the ECU 28 stores a point in time at which the addition of fuel was carried out.

In step S104, the ECU 28 obtains the timing at which a change in the air fuel ratio of the exhaust gas following the addition of fuel which has been carried out in step S103 is detected by the air fuel ratio sensor 20. Specifically, a point in time when the measured value obtained by the air fuel ratio sensor 20 changes to a rich air fuel ratio corresponding to an amount of added fuel is detected, and that point in time is stored.

In step S105, the ECU 28 obtains the delay time $\Delta t$ from a time difference between the execution timing of the addition of fuel obtained in step S103, and the timing obtained in step S104 at which a change in the air fuel ratio of the exhaust gas following the addition of fuel was detected.

In step S106, the ECU 28 converts the delay time $\Delta t$ obtained in step S105 into a number of cycles, assigns it for the equation of Expression 2, and obtains an actual value of the ratio $\beta$ of the low pressure EGR gas in the entire EGR gas.

In step S107, the ECU 28 obtains a deviation of the actual value of the ratio $\beta$ obtained in step S106 with respect to its target value, and determines whether the magnitude of the deviation is equal to or less than a predetermined upper limit value. In cases where a determination is made in step S107 that the deviation is equal to or less than the predetermined upper limit value (Yes), the process of the ECU 28 goes to the processing of step S108. On the other hand, in cases where a determination is made in step S107 that the deviation exceeds the predetermined upper limit value (No), the process of the ECU 28 goes to the processing of step S110.

In step S108, the ECU 28 obtains an amount of correction of the degree of opening of the low pressure EGR valve 14 for bringing the ratio $\beta$ close to its target value, based on the deviation of the actual value of the ratio $\beta$ with respect to the target value.

In step S109, the ECU 28 carries out the correction of the degree of opening of the low pressure EGR valve 14 based on the amount of correction of the degree of opening obtained in step S108. For example, in cases where the actual value of the ratio $\beta$ obtained in step S106 is smaller than the target value, it is meant that the current ratio or proportion of the low pressure EGR gas is too small, so the degree of opening of the low pressure EGR valve 14 is corrected in an increasing direction. On the contrary, in cases where the actual value of the ratio $\beta$ obtained in step S106 is larger than the target value, it is meant that the current ratio or proportion of the low pressure EGR gas is too large, so the degree of opening of the low pressure EGR valve 14 is corrected in a decreasing direction. Thus, in the EGR system of this embodiment, the actual value of the ratio $\beta$ can be obtained, so it becomes possible to detect the deviations of the ratio or proportion of the low pressure EGR gas and the ratio or proportion of the high pressure EGR gas from their target values, respectively, and hence it becomes possible to carry out feedback control for adjusting these ratios to their target values, respectively.

In cases where the deviation of the actual value of the ratio $\beta$ obtained in step S106 and its target value exceeds the upper limit value, the ECU 28 makes a determination that a certain abnormality or malfunction has occurred in the EGR control system, and in step S110, lights a multifunction indicator lamp (MIL) so as to warn the occurrence of abnormality, and at the same time, in step S111, performs the limitation of the degree of opening of the accelerator pedal. Thus, in the EGR system of this embodiment, the actual value of the ratio $\beta$ can be obtained, so for example, even in a condition in which a total EGR ratio matches its target value in spite of the fact that the ratio or proportion of the high pressure EGR gas or the ratio or proportion of the low pressure EGR gas greatly deviates from its target value, it becomes possible to detect a malfunction of the EGR system in a reliable manner.

In this embodiment, the ECU 28, which carries out the processing of step S103 through step S106, corresponds to an obtaining means in the present invention. Also, the ECU 28, which carries out the processing of step S107 through step S109, corresponds to a control means in the present invention. Moreover, the ECU 28, which carries out the processing of step S107, step S110 through step S111, corresponds to an abnormality determination means in the present invention.

Here, note that the embodiment described above is only one example for explaining the present invention, and can be subjected to various changes within the scope not departing from the gist of the present invention.

For example, the air fuel ratio sensor 20 in this embodiment acting as a detection means is a sensor which is provided for exhaust gas purification processing, and is able to measure the air fuel ratio of the exhaust gas, but it is satisfactory, as a detection means of the present invention, to be able to detect a change in the air fuel ratio of the exhaust gas following the addition of fuel or the post injection of fuel, and there is not necessarily a need to be able to measure the value of an air fuel ratio. Accordingly, instead of an air fuel ratio sensor which can obtain a linear output, for example, an oxygen sensor, etc., capable of obtaining a binary output can also be used as a detection means of the present invention.

However, in cases where such a sensor is already mounted on the system for exhaust gas purification processing and other purposes, as in the case of the air fuel ratio sensor 20 in this embodiment, it is preferable to divert it as the detection means in the present invention. In other words, in the system in which such a sensor is not already provided or existing, newly mounting such a sensor only for the purpose of obtaining the ratio between the high pressure EGR gas and the low pressure EGR gas leads to a cost increase. For this reason, in cases where the present invention is applied to such a system, it is preferable to use, among other existing sensors, one which can be diverted as the detection means of the present invention.

As the detection means of the present invention, it is satisfactory to have only an ability to detect the arrival of the exhaust gas of which the characteristic has changed.

In this embodiment, the description has been given to the case in which the air fuel ratio of an exhaust gas is used as the characteristic of the exhaust gas which is to be changed intentionally, and the air fuel ratio sensor is used as a means which has the ability to detect the arrival of the exhaust gas of which the air fuel ratio has been changed, but as the characteristic of the exhaust gas, any characteristic may be used which is able to be changed intentionally, and for example, oxygen concentration, temperature, pressure, or the like may be sufficient. In that case, as the detection means, there can be used an oxygen concentration sensor, a temperature sensor, a pressure sensor, or the like. However, the air fuel ratio sensor is fast in response, so the ratio between the high pressure EGR gas and the low pressure EGR gas can be obtained with high accuracy by obtaining a measured value of the delay time by means of the air fuel ratio sensor, as in this embodiment.

In this embodiment, the construction has been described in which the air fuel ratio sensor 20 is arranged in the exhaust passage 4 at the downstream side of the branch portion 30 of the low pressure EGR passage 12, but even a construction which has the air fuel ratio sensor 20 arranged at the upstream side of the branch portion 30 can be used for the measurement of the delay time, similar to this embodiment.

## Claims

1. An EGR system of an internal combustion engine **(1)** comprising:

   a supercharger that has a turbine **(8)** arranged in an exhaust passage **(4)** of the internal combustion engine **(1)** and a compressor **(7)** arranged in an intake passage **(3)** of the internal combustion engine **(1)**;
   a high pressure EGR passage **(9)** that connects between said exhaust passage **(4)** at a location upstream of said turbine **(8)** and said intake passage **(3)** at a location downstream of said compressor **(7)**;
   a low pressure EGR passage **(12)** that connects between said exhaust passage **(4)** at a location downstream of said turbine **(8)** and said intake passage **(3)** at a location upstream of said compressor **(7)**; and
   a detection means **(20)** for detecting a change of a predetermined characteristic of an exhaust gas in said exhaust passage **(4)** at the downstream side of a connection part thereof with said high pressure EGR passage **(9)** ;
   a changing means **(21,29)** for changing said characteristic of the exhaust gas; the EGR system being **characterized by** comprising
   an obtaining means **(28)** for obtaining **a mixing ratio which is** a ratio between an exhaust gas recirculated to said intake passage **(3)** through said high pressure EGR passage **(9)** and an exhaust gas recirculated to said intake passage **(3)** through said low pressure EGR passage **(12),** in an entire exhaust gas recirculated to said intake passage **(3),** based on a delay time after said characteristic of the exhaust gas is changed by said changing means **(21,29)** until a change of the characteristic is detected by said detection means **(20).**

2. The EGR system of an internal combustion engine according to claim 1, **characterized in that** said obtaining means **(28)** obtains said mixing ratio based on:

   the delay time after the characteristic of the exhaust gas is changed by said changing means **(21,29)** until a change of the characteristic is detected by said detection means **(20)** ;
   a volume of a flow path of the exhaust gas from a position at which the characteristic of the exhaust gas is changed by said changing means **(21,29)** to a position at which the change of the characteristic is detected by said detection means **(20)** ;
a displacement of said internal combustion engine **(1)**;
a volumetric efficiency of said internal combustion engine **(1)**;
a temperature and a pressure of an intake gas of said internal combustion engine **(1)**;
a temperature and a pressure of the exhaust gas recirculated to the intake passage **(3)** through said low pressure EGR passage **(12)**; and
a number of revolutions per unit time of said internal combustion engine **(1).**

3. The EGR control system of an internal combustion engine according to claim 1 or 2, **characterized in that**
said detection means **(20)** has an air fuel ratio measuring means **(20)** for measuring an air fuel ratio of the exhaust gas in said exhaust passage **(4)** downstream of its connection part with said high pressure EGR passage **(9)** and upstream of its connection part with said low pressure EGR passage **(12)** ;
said changing means **(21,29)** has a fuel supply means **(21,29)** for supplying fuel to the exhaust gas upstream of the position at which the measurement of the air fuel ratio by said air fuel ratio measuring means **(20)** is carried out; and
said obtaining means **(28)** obtains said ratio based on a delay time after fuel is added to the exhaust gas by said fuel **supply** means **(21,29)** until a change in the air fuel ratio of the exhaust gas following the addition of fuel is measured by said air fuel ratio measuring means **(20).**

4. The EGR control system of an internal combustion engine according to claim 1 or 2, **characterized in that**
said detection means **(20)** has an air fuel ratio measuring means **(20)** for measuring an air fuel ratio of the exhaust gas in said exhaust passage **(4)** downstream of its connection part with said low pressure EGR passage **(12)**;
said changing means **(21,29)** has a fuel supply means **(21,29)** for supplying fuel to the exhaust gas upstream of the position at which the measurement of the air fuel ratio by said air fuel ratio measuring means **(20)** is carried out; and
said obtaining means **(28)** obtains said ratio based on a delay time after fuel is added to the exhaust gas by said fuel **supply** means **(21,29)** until a change in the air fuel ratio of the exhaust gas following the addition of fuel is measured by said air fuel ratio measuring means **(20).**

5. The EGR control system of an internal combustion engine according to claim 3 or 4, **characterized in that**
said fuel supply means **(21,29)** has a fuel addition valve **(21)** that is arranged in the exhaust passage **(4)** upstream of the position at which the measurement of the air fuel ratio by said air fuel ratio measuring means **(20)** is carried out, and adds fuel to the exhaust gas by means of said fuel addition valve **(21).**

6. The EGR control system of an internal combustion engine according to claim 3 or 4, **characterized in that**
said fuel supply means **(21,29)** has a fuel injection valve **(29)** that directly injects fuel into a cylinder **(2)** of said internal combustion engine **(1),** and carries out a post fuel injection by means of said fuel injection valve **(29)** after a main fuel injection.

7. The EGR control system of an internal combustion engine according to any one of claims 1 through 6, **characterized by** further comprising:

    a control means **(28)** for controlling an amount of exhaust gas recirculated to said intake passage **(3)** through said high pressure EGR passage **(9)** and an amount of exhaust gas recirculated to said intake passage **(3)** through said low pressure EGR passage **(12)** in such a manner that the mixing ratio obtained by said obtaining means **(28)** becomes a predetermined target value.

8. The EGR control system of an internal combustion engine according to any one of claims 1 through 7, **characterized in that**
an abnormality determination means **(28)** for making a determination that an abnormality has occurred in said control means **(28),** in cases where the mixing ratio obtained by said obtaining means **(28)** deviates from a predetermined target value by more than a predetermined threshold value.

**Patentansprüche**

1. EGR-System einer Brennkraftmaschine (1), mit:

    einem Auflader, der eine Turbine (8), die in einem Abgasdurchgang (4) der Brennkraftmaschine (1) angeordnet ist, und einen Kompressor (7) hat, der in einem Einsaugdurchgang (3) der Brennkraftmaschine (1) angeordnet ist;

einem Hochdruck-EGR-Durchgang (9), der zwischen dem Abgasdurchgang (4) an einer Stelle stromauf der Turbine (8) und dem Einsaugdurchgang (3) an einer Stelle stromab des Kompressors (7) verbindet;

einem Niederdruck-EGR-Durchgang (12), der zwischen dem Abgasdurchgang (4) an einer Stelle stromab der Turbine (8) und dem Einsaugdurchgang (3) an einer Stelle stromauf des Kompressors (7) verbindet; und

einer Erfassungseinrichtung (20) zum Erfassen einer Änderung einer vorherbestimmten Charakteristik eines Abgases in dem Abgasdurchgang (4) an der Stromabseite eines Verbindungsteils davon mit dem Hochdruck-EGR-Durchgang (9);

einer Änderungseinrichtung (21, 29) zum Ändern der Charakteristik des Abgases; wobei das EGR-System **gekennzeichnet ist durch** Aufweisen von

einer Ermittlungseinrichtung (28) zum Ermitteln eines Mischungsverhältnisses, das ein Verhältnis zwischen einem Abgas, das **durch** den Hochdruck-EGR-Durchgang (9) zu dem Einsaugdurchgang (3) wieder zugeführt worden ist, und einem Abgas, das **durch** den Niederdruck-EGR-Durchgang (12) zu dem Einsaugdurchgang (3) wieder zugeführt worden ist, in einem Gesamtabgas, das zu dem Einsaugdurchgang (3) wieder zugeführt worden ist, auf der Grundlage einer Verzögerungszeit nachdem die Charakteristik des Abgases mittels der Änderungseinrichtung (21, 29) geändert worden ist, bis eine Änderung der Charakteristik mittels der Erfassungseinrichtung (20) erfasst ist.

2. EGR-System einer Brennkraftmaschine nach Anspruch 1, **dadurch gekennzeichnet, dass** die Ermittlungseinrichtung (28) das Mischungsverhältnis auf der Grundlage ermittelt:

der Verzögerungszeit, nachdem die Charakteristik des Abgases mittels der Änderungseinrichtung (21, 29) geändert ist, bis eine Änderung der Charakteristik mittels der Erfassungseinrichtung (20) erfasst ist;

eines Pfadvolumenstroms des Abgases von einer Position, an der die Charakteristik des Abgases mittels der Änderungseinrichtung (21, 29) geändert ist, zu einer Position, an der die Änderung der Charakteristik mittels der Erfassungseinrichtung (20) erfasst ist;

eines Versatzes der Brennkraftmaschine (1);

eines volumetrischen Wirkungsgrads der Brennkraftmaschine (1);

einer Temperatur und eines Drucks eines Einsauggases der Brennkraftmaschine (1);

einer Temperatur und eines Drucks des Abgases, das durch den Niederdruck-EGR-Durchgang (12) zu dem Einsaugdurchgang wieder zugeführt worden ist; und

einer Anzahl an Umdrehungen pro Zeiteinheit der Brennkraftmaschine (1).

3. EGR-Steuersystem einer Brennkraftmaschine nach Anspruch 1 oder 2, **dadurch gekennzeichnet, dass** die Erfassungseinrichtung (20) eine Luftkraftstoffverhältnismesseinrichtung (20) zum Messen eines Luftkraftstoffverhältnisses des Abgases in dem Abgasdurchgang (4) stromab von seinem Verbindungsteil mit dem Hochdruck-EGR-Durchgang (9) und stromauf von seinem Verbindungsteil mit dem Niederdruck-EGR-Durchgang (12) hat;

die Änderungseinrichtung (21, 29) eine Kraftstoffzuführeinrichtung (21, 29) zum Zuführen von Kraftstoff zu dem Abgas stromauf von der Position, an der die Messung des Luftkraftstoffverhältnisses mittels der Luftkraftstoffverhältnismesseinrichtung (20) ausgeführt wird, hat; und

die Ermittlungseinrichtung (28) das Verhältnis auf der Grundlage einer Verzögerungszeit, nachdem Kraftstoff zu dem Abgas mittels der Kraftstoffzuführeinrichtung (21, 29) zugefügt worden ist, bis eine Änderung in dem Luftkraftstoffverhältnis des Abgases nachfolgend dem Hinzufügen von Kraftstoff, mittels der Luftkraftstoffverhältnismesseinrichtung (20) gemessen worden ist, ermittelt.

4. EGR-Steuersystem einer Brennkraftmaschine nach Anspruch 1 oder 2, **dadurch gekennzeichnet, dass** die Erfassungseinrichtung (20) eine Luftkraftstoffverhältnismesseinrichtung (20) zum Messen eines Luftkraftstoffverhältnisses des Abgases in dem Abgasdurchgang (4) stromab von seinem Verbindungsteil mit dem Niederdruck-EGR-Durchgang (12) hat;

die Änderungseinrichtung (21, 29) eine Kraftstoffzuführeinrichtung (21, 29) zum Zuführen von Kraftstoff zu dem Abgas stromauf der Position hat, an der die Messung des Luftkraftstoffverhältnisses mittels der Luftkraftstoffverhältnismesseinrichtung (20) durchgeführt wird; und

die Ermittlungseinrichtung (28) das Verhältnis auf der Grundlage einer Verzögerungszeit, nachdem Kraftstoff zu dem Abgas mittels der Kraftstoffzuführeinrichtung (21, 29) hinzugefügt wurde bis eine Änderung in dem Luftkraftstoffverhältnis des Abgases, nachfolgend dem Hinzufügen des Kraftstoffes, mittels der Luftkraftstoffverhältnismesseinrichtung (20) gemessen worden ist, ermittelt.

5. EGR-Steuersystem einer Brennkraftmaschine nach Anspruch 3 oder 4, **dadurch gekennzeichnet, dass** die Kraftstoffzuführeinrichtung (21, 29) ein Kraftstoffhinzufügeventil (21) hat, das in dem Abgasdurchgang (4) stromauf der Position angeordnet ist, an der die Messung des Luftkraftstoffverhältnisses mittels der Luftkraftstoffverhältnismesseinrichtung (20) durchgeführt wird, und Kraftstoff mittels des Kraftstoffhinzufügeventils (21) hinzufügt.

6. EGR-Steuersystem einer Brennkraftmaschine nach Anspruch 3 oder 4, **dadurch gekennzeichnet, dass** die Kraftstoffzuführeinrichtung (21, 29) ein Kraftstoffeinspritzventil (29) hat, das Kraftstoff direkt in einen Zylinder (2) der Brennkraftmaschine (1) einspritzt, und einen Nachkraftstoffeinspritzung mittels des Kraftstoffeinspritzventils (29) nach einer Hauptkraftstoffeinspritzung durchführt.

7. EGR-Steuersystem einer Brennkraftmaschine nach einem der Ansprüche 1 bis 6, **gekennzeichnet durch** Aufweisen von:

   einer Steuereinrichtung (28) zum Steuern eines Betrags von Abgas, das **durch** den Hochdruck-EGR-Durchgang (9) zu dem Einsaugdurchgang (3) wieder zurückgeführt worden ist, und eines Betrags an Abgas, das **durch** den Niederdruck-EGR-Durchgang (12) zu dem Einsaugdurchgang (3) zurückgeführt worden ist, auf eine solche Art und Weise, dass das Mischungsverhältnis, das mittels der Ermittlungseinrichtung (28) ermittelt worden ist, ein vorherbestimmter Sollwert wird.

8. EGR-Steuersystem einer Brennkraftmaschine nach einem der Ansprüche 1 bis 7, **dadurch gekennzeichnet, dass** eine Abnormalitätsbestimmungseinrichtung (28) zum Bestimmen, dass eine Abnormalität in der Steuereinrichtung (28) aufgetreten ist, für Fälle, wo das mittels der Ermittlungseinrichtung (28) ermittelte Mischungsverhältnis von einem vorherbestimmten Sollwert um mehr als einen vorherbestimmten Grenzwert abweicht.

**Revendications**

1. Système d'EGR d'un moteur à combustion interne (1) comprenant :

   un turbocompresseur qui comporte une turbine (8) agencée dans un passage d'échappement (4) du moteur à combustion interne (1) et un compresseur (7) agencé dans un passage d'admission (3) du moteur à combustion interne (1) ;
   un passage d'EGR haute pression (9) qui relie ledit passage d'échappement (4) en un emplacement en amont de ladite turbine (8) et ledit passage d'admission (3) en un emplacement en aval dudit compresseur (7) ;
   un passage d'EGR basse pression (12) qui relie ledit passage d'échappement (4) en un emplacement en aval de ladite turbine (8) et ledit passage d'admission (3) en en emplacement en amont dudit compresseur (7) ; et
   des moyens de détection (20) pour détecter une modification d'une caractéristique prédéterminée d'un gaz d'échappement dans ledit passage d'échappement (4) du côté aval d'une partie de liaison de celui-ci avec ledit passage d'EGR haute pression (9) ;
   des moyens de modification (21, 29) pour modifier ladite caractéristique du gaz d'échappement ; le système d'EGR étant **caractérisé en ce qu'**il comprend
   des moyens d'obtention (28) pour obtenir un rapport de mélange qui est un rapport entre un gaz d'échappement remis en circulation dans ledit passage d'admission (3) par l'intermédiaire dudit passage d'EGR haute pression (9) et un gaz d'échappement remis en circulation dans ledit passage d'admission (3) par l'intermédiaire dudit passage d'EGR basse pression (12), dans un gaz d'échappement total remis en circulation dans ledit passage d'admission (3), en fonction d'un délai après que ladite caractéristique du gaz d'échappement a été modifiée par lesdits moyens de modification (21, 29) jusqu'à ce qu'une modification de la caractéristique a été détectée par lesdits moyens de détection (20).

2. Système d'EGR d'un moteur à combustion interne selon la revendication 1, **caractérisé en ce que** lesdits moyens d'obtention (28) obtiennent ledit rapport de mélange en fonction :

   du délai après que la caractéristique du gaz d'échappement a été modifiée par lesdits moyens de modification (21, 29) jusqu'à ce qu'une modification de la caractéristique a été détectée par lesdits moyens de détection (20) ;
   d'un volume d'un chemin d'écoulement du gaz d'échappement depuis une position dans laquelle la caractéristique du gaz d'échappement est modifiée par lesdits moyens de modification (21, 29) jusqu'à une position dans laquelle la modification de la caractéristique est détectée par lesdits moyens de détection (20) ;
   d'un déplacement dudit moteur à combustion interne (1) ;
   d'un rendement volumétrique dudit moteur à combustion interne (1) ;
   d'une température et d'une pression d'un gaz d'admission dudit moteur à combustion interne (1) ;

d'une température et d'une pression du gaz d'échappement remis en circulation dans le passage d'admission (3) par l'intermédiaire dudit passage d'EGR basse pression (12) ; et

d'un nombre de révolutions par unité de temps dudit moteur à combustion interne (1).

3. Système de commande d'EGR d'un moteur à combustion interne selon la revendication 1 ou 2, **caractérisé en ce que**
lesdits moyens de détection (20) comportent des moyens de mesure de rapport air-carburant (20) pour mesurer un rapport air-carburant du gaz d'échappement dans ledit passage d'échappement (4) en aval de sa partie de liaison avec ledit passage d'EGR haute pression (9) et en amont de sa partie de liaison avec ledit passage d'EGR basse pression (12) ;
lesdits moyens de modification (21, 29) comportent des moyens d'alimentation en carburant (21, 29) pour alimenter du carburant vers le gaz d'échappement en amont de la position dans laquelle la mesure du rapport air-carburant par lesdits moyens de mesure de rapport air-carburant (20) est réalisée ; et
lesdits moyens d'obtention (28) obtiennent ledit rapport en fonction d'un délai après que le carburant a été ajouté dans le d'échappement par lesdits moyens d'alimentation en carburant (21, 29) jusqu'à ce qu'une modification du rapport air-carburant du gaz d'échappement suite à l'addition du carburant a été mesurée par lesdits moyens de mesure de rapport air-carburant (20).

4. Système de commande d'EGR d'un moteur à combustion interne selon la revendication 1 ou 2, **caractérisé en ce que**
lesdits moyens de détection (20) comportent des moyens de mesure de rapport air-carburant (20) pour mesurer un rapport air-carburant du gaz d'échappement dans ledit passage d'échappement (4) en aval de sa partie de liaison avec ledit passage d'EGR basse pression (12) ;
lesdits moyens de modification (21, 29) comportent des moyens d'alimentation en carburant (21, 29) pour alimenter du carburant vers le gaz d'échappement en amont de la position dans laquelle la mesure du rapport air-carburant par lesdits moyens de mesure de rapport air-carburant (20) est réalisée ; et
lesdits moyens d'obtention (28) obtiennent ledit rapport en fonction d'un délai après que le carburant a été ajouté dans le d'échappement par lesdits moyens d'alimentation en carburant (21, 29) jusqu'à ce qu'une modification du rapport air-carburant du gaz d'échappement suite à l'addition du carburant a été mesurée par lesdits moyens de mesure de rapport air-carburant (20).

5. Système de commande d'EGR d'un moteur à combustion interne selon la revendication 3 ou 4, **caractérisé en ce que**
lesdits moyens d'alimentation en carburant (21, 29) comportent une soupape d'ajout de carburant (21) qui est agencée dans le passage d'échappement (4) en amont de la position dans laquelle la mesure du rapport air-carburant par lesdits moyens de mesure de rapport air-carburant (20) est réalisée et ajoutent du carburant dans le gaz d'échappement au moyen de ladite soupape d'ajout de carburant (21).

6. Système de commande d'EGR d'un moteur à combustion interne selon la revendication 3 ou 4, **caractérisé en ce que**
lesdits moyens d'alimentation en carburant (21, 29) comportent une soupape d'injection de carburant (29) qui injecte directement du carburant dans un cylindre (2) dudit moteur à combustion interne (1), et réalisent une post-injection de carburant au moyen de ladite soupape d'injection de carburant (29) après une injection de carburant principale.

7. Système de commande d'EGR d'un moteur à combustion interne selon l'une quelconque des revendications 1 à 6, **caractérisé en ce qu'**il comprend en outre :

des moyens de commande (28) pour commander une quantité de gaz d'échappement remis en circulation dans ledit passage d'admission (3) par l'intermédiaire dudit passage d'EGR haute pression (9) et une quantité de gaz d'échappement remis en circulation dans ledit passage d'admission (3) par l'intermédiaire dudit passage d'EGR basse pression (12) de telle manière que le rapport de mélange obtenu par lesdits moyens d'obtention (28) devienne une valeur cible prédéterminée.

8. Système de commande d'EGR d'un moteur à combustion interne selon l'une quelconque des revendications 1 à 7, **caractérisé en ce que**
des moyens de détermination d'anormalité (28) pour effectuer une détermination qu'une anormalité est survenue dans lesdits moyens de commande (28), dans des cas où le rapport de mélange obtenu par lesdits moyens d'obtention (28) dévie d'une valeur cible prédéterminée de plus qu'une valeur de seuil prédéterminée.

Fig.1

AMOUNT OF LOW PRESSURE EGR GAS [g/rev]

*Fig.2*

START

S101 — OBTAIN OPERATING STATE

S102 — DOES CONDITION FOR ADDITION OF FUEL TO EXHAUST GAS HOLD ? — No

Yes

S103 — EXECUTE ADDITION OF FUEL

S104 — DETECT ARRIVAL OF RICH GAS BY AIR FUEL RATIO SENSOR

S105 — OBTAIN DELAY TIME

S106 — OBTAIN ACTUAL RATIO OF LOW PRESSURE EGR GAS

S107 — |ACTUAL RATIO - TARGET VALUE| ≦ UPPER LIMIT VALUE ? — No

Yes

S108 — CALCULATE CORRECTED DEGREEOF OPENING OF LOW PRESSURE EGR VALVE

S110 — LIGHT MIL

S109 — PERFORM CORRECTION OF DEGREE OF OPENING OF LOW PRESSURE EGR VALVE

S111 — PERFORM LIMITATION OF DEGREE OF OPENING OF ACCELERATOR PEDAL

END

**Fig.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008261300 A

- WO 2008149212 A1